# EUROPÄISCHE PATENTSCHRIFT

(11) **EP 3 603 339 B1**
(45) Veröffentlichungstag und Bekanntmachung des Hinweises auf die Patenterteilung: **13.10.2021**
(21) Anmeldenummer: 18718199.5
(22) Anmeldetag: 12.03.2018
(51) Int. Cl.: H05B 6/12

(54) **INDUKTIONSKOCHFELDVORRICHTUNG**
INDUCTION COOKTOP DEVICE
DISPOSITIF À PLAQUE DE CUISSON À INDUCTION

(30) Priorität: 30.03.2017 ES 201730497
(43) Veröffentlichungstag der Anmeldung: 05.02.2020
(73) Patentinhaber: BSH Hausgeräte GmbH, 81739 München (DE)
(72) Erfinder: ACERO ACERO, Jesus, 50002 Zaragoza (ES); ALMOLDA FANDOS, Manuel, 50019 Zaragoza (ES); HERNANDEZ BLASCO, Pablo Jesus, 50019 Zaragoza (ES); LLORENTE GIL, Sergio, 50009 Zaragoza (ES); LOPE MORATILLA, Ignacio, 50010 Zaragoza (ES); MOYA ALBERTIN, Maria Elena, 50002 Zaragoza (ES); SERRANO TRULLEN, Javier, 50017 Zaragoza (ES)
(86) Internationale Anmeldenummer: PCT/IB2018/051620
(87) Internationale Veröffentlichungsnummer: WO 2018/178788

(56) Entgegenhaltungen:
- EP-A2- 2 207 401
- WO-A1-2010/148546
- JP-A- H1 145 777
- JP-A- 2008 188 159
- JP-A- 2014 096 243

## Beschreibung

Die Erfindung betrifft eine Induktionskochfeldvorrichtung nach dem Oberbegriff des Anspruchs 1 und ein Verfahren zur Herstellung einer Induktionskochfeldvorrichtung nach dem Oberbegriff des Anspruchs 9.

Aus der europäischen Patentanmeldung EP 1 858 300 A1 ist bereits eine Induktionskochfeldvorrichtung mit einer Vielzahl von überlappenden Induktionsheizelementen bekannt.

Die Induktionsheizelemente sind in mehreren Ebenen übereinander angeordnet. In jeder der Ebenen ist ein Teil der Induktionsheizelemente in Form einer Matrix koplanar relativ zueinander angeordnet.

Die JP H11 45777 A offenbart eine elektromagnetische Kochheizvorrichtung, wobei eine uneinheitliche Erwärmung erfolgt, indem eine Heizspule um ein Zentrum auf einer Drehachse unter einem tragenden Teil einer beheizten Pfanne bewegt wird.

Die JP 2014 096243 A offenbart eine Induktionsheizvorrichtung mit mehreren Spulenanteilen welche jeweils Heizspulen umfassen. Die Spulenanteile sind in einer vertikalen, horizontalen und einer Drehrichtung bewegbar, wodurch sich die Spulenanteile derart ausrichten können, dass sich die Heizspulen an die unterschiedlichen Pfannenformen anpassen.

Die WO 2010/148546 A1 offenbart eine elektromagnetische Kochheizvorrichtung mit Heizspulen, welche mehrere Wicklungen umfassen, die um den Mittelpunkt eines Kochfeldes expandieren und zwei Bereiche mit erhöhter Dichte an Heizspulen definieren, sodass kleine sowie große Gärbehälter effizient erwärmt werden können.

Die Aufgabe der Erfindung besteht insbesondere darin, eine gattungsgemäße Induktionskochfeldvorrichtung mit verbesserten Eigenschaften hinsichtlich einer Leistungsabgabe und eines Wirkungsgrads bereitzustellen. Die Aufgabe wird erfindungsgemäß durch die Merkmale der Ansprüche 1 und 9 gelöst, während vorteilhafte Ausgestaltungen und Weiterbildungen der Erfindung den Unteransprüchen entnommen werden können.

Die Erfindung geht aus von einer Induktionskochfeldvorrichtung mit zumindest einer Induktionsheizeinheit, welche zumindest ein Induktionsheizelement umfasst und mit zumindest einer Kochfeldebene.

Es wird vorgeschlagen, dass sich das zumindest eine Induktionsheizelement zumindest in einem Teilbereich entlang einer ersten Haupterstreckungsebene erstreckt, die von der Kochfeldebene abweicht. Durch die erfindungsgemäße Ausgestaltung kann eine gattungsgemäße Induktionskochfeldvorrichtung vorteilhaft weiterentwickelt werden. Die zumindest eine Induktionsheizeinheit kann mit weiteren Induktionsheizeinheiten besonders kompakt überlappend angeordnet werden.

Unter einer "Induktionskochfeldvorrichtung", soll insbesondere zumindest ein Teil, insbesondere eine Unterbaugruppe, eines Induktionskochfelds verstanden werden. Das Induktionsheizelement ist insbesondere dazu vorgesehen, ein elektromagnetisches Wechselfeld insbesondere mit einer Frequenz in einem Bereich von 20 kHz bis 100 kHz zu erzeugen, das insbesondere dazu vorgesehen ist, in einem aufgestellten, insbesondere metallischen, vorzugsweise ferromagnetischen Gargeschirrboden durch Wirbelstrominduktion und/oder Ummagnetisierungseffekte in Wärme umgewandelt zu werden. Insbesondere weist die Induktionskochfeldvorrichtung zumindest vier, insbesondere zumindest sechs, vorteilhaft zumindest acht, besonders vorteilhaft zumindest zehn, vorzugsweise zumindest zwölf und besonders bevorzugt eine Vielzahl von Induktionsheizelemente (n) auf.

Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Unter einer "Längserstreckung" eines Objekts soll insbesondere Erstreckung des Objekts entlang einer Längserstreckungsrichtung des Objekts verstanden werden. Unter einer "Längserstreckungsrichtung" eines Objekts soll insbesondere eine Richtung verstanden werden, welche parallel zu einer längsten Seite eines kleinsten gedachten geometrischen Quaders ausgerichtet ist, welcher das Objekt gerade noch vollständig umschließt. Unter einer "Erstreckung" eines Objekts soll insbesondere ein maximaler Abstand zweier Punkte einer senkrechten Projektion des Objekts auf eine Ebene verstanden werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Beispielsweise könnten die Induktionsheizelemente bei einer senkrechten Betrachtung auf zumindest eine Haupterstreckungsebene wenigstens eines der Induktionsheizelemente eine wenigstens im Wesentlichen polygonale Gestalt aufweisen, wie beispielsweise eine wenigstens im Wesentlichen rechteckige und/oder quadratische und/oder n-eckige Gestalt. Vorteilhaft weisen die Induktionsheizelemente bei einer senkrechten Betrachtung auf zumindest eine Haupterstreckungsebene wenigstens eines der Induktionsheizelemente eine wenigstens im Wesentlichen ovale Gestalt auf. Die Induktionsheizelemente könnten bei einer senkrechten Betrachtung auf zumindest eine Haupterstreckungsebene wenigstens eines der Induktionsheizelemente eine wenigstens im Wesentlichen kreisförmige Gestalt aufweisen. Alternativ oder zusätzlich könnten die Induktionsheizelemente bei einer senkrechten Betrachtung auf zumindest eine Haupterstreckungsebene wenigstens eines der Induktionsheizelemente eine wenigstens im Wesentlichen ellipsenförmige Gestalt aufweisen. Besonders vorteilhaft bildet das Induktionsheizelement zumindest einen Heizleiter aus. Die Kochfeldebene wird insbesondere durch eine Kochfeldplatte definiert. In anderen Worten erstreckt sich die Kochfeldplatte entlang der Kochfeldebene. In einem montierten Zustand ist die Kochfeldplatte insbesondere zu einem Aufstellen von Gargeschirr vorgesehen. Darunter, dass die erste Haupterstreckungsebene von der Kochfeldebene abweicht, soll in diesem Zusammenhang insbesondere verstanden werden, dass die erste Haupterstreckungsebene schräg oder senkrecht zur Kochfeldebene verläuft.

Erfindungsgemäß verläuft die Haupterstreckungsebene nicht parallel zur Kochfeldebene. Es ist in diesem Zusammenhang denkbar, dass sich das Induktionsheizelement vollständig in der ersten Haupterstreckungsebene erstreckt.

In einer weiteren Ausgestaltung der Erfindung wird vorgeschlagen, dass das zumindest eine Induktionsheizelement einen ersten Abschnitt und zumindest einen zweiten Abschnitt aufweist, wobei sich der erste Abschnitt zumindest im Wesentlichen innerhalb einer zweiten Haupterstreckungsebene erstreckt und sich der zweite Abschnitt zumindest im Wesentlichen innerhalb einer von der zweiten Haupterstreckungsebene verschiedenen dritten Haupterstreckungsebene erstreckt. Dadurch können mehrere Induktionsheizelemente besonders kompakt zueinander angeordnet werden. Gleichzeitig kann ein besonders hoher Wirkungsgrad und eine gleichmäßige elektromagnetische Abstrahlung erzielt werden. Zusätzlich wird vorgeschlagen, dass das zumindest eine Induktionsheizelement zumindest einen dritten Abschnitt aufweist, wobei der dritte Abschnitt zumindest im Wesentlichen innerhalb einer von der zweiten und dritten Haupterstreckungsebene verschiedenen vierten Haupterstreckungsebene erstreckt.

Ferner wird vorgeschlagen, dass die zweite Haupterstreckungsebene und die dritte Haupterstreckungsebene zumindest im Wesentlichen parallel zueinander verlaufen. Dadurch kann die Induktionskochfeldvorrichtung einen besonders hohen Wirkungsgrad erzielen. Weiterhin vorteilhaft ist das Induktionsheizelement einstückig und/oder einteilig ausgebildet. Unter "zumindest im Wesentlichen" soll in diesem Zusammenhang insbesondere eine Abweichung von maximal 20°, bevorzugt von maximal 5° und besonders bevorzugt von maximal 0,5° verstanden werden.

Des Weiteren wird vorgeschlagen, dass die Induktionsheizeinheit zumindest einen ersten Heizelementträger umfasst, an dem das zumindest eine Induktionsheizelement zumindest bereichsweise angeordnet ist. Dadurch kann eine besonders hohe Stabilität und eine einfache Montage erzielt werden. Der Heizelementträger bildet vorzugsweise eine Glimmerplatte und/oder eine Leiterplatte aus. Die Leiterplatte könnte insbesondere zumindest eine Lage aufweisen, an welcher die Induktionsheizelemente angeordnet sind. Vorteilhaft könnte die Leiterplatte zumindest zwei und vorzugsweise zumindest drei Lagen aufweisen, an welchen die Induktionsheizelemente insbesondere angeordnet sind. Insbesondere könnten die Induktionsheizelemente auf die Leiterplatte und insbesondere auf Lagen der Leiterplatte aufgedruckt sein.

Weiterhin wird vorgeschlagen, dass der zumindest eine Teilbereich zwischen dem ersten Abschnitt und dem zweiten Abschnitt angeordnet ist. Dadurch kann die Induktionsheizeinheit eine besonders einfach hergestellt und montiert werden. Bevorzugt verläuft die erste Haupterstreckungsebene schräg zur zweiten Haupterstreckungsebene und/oder zur dritten Haupterstreckungsebene. Besonders vorteilhaft beträgt ein Winkel zwischen der erste Haupterstreckungsebene und der zweiten Haupterstreckungsebene und/oder der dritten Haupterstreckungsebene zumindest im Wesentlichen 45°. Besonders weist das Induktionsheizelement im Teilbereich einen zumindest im Wesentlichen doppelbogenförmigen und/oder S-förmigen Querschnitt auf.

Ferner wird vorgeschlagen, dass die Induktionskochfeldvorrichtung zumindest eine weitere Induktionsheizeinheit mit zumindest einem weiteren Induktionsheizelement umfasst, welches einen weiteren ersten Abschnitt und zumindest einen weiteren zweiten Abschnitt aufweist, wobei sich der weitere erste Abschnitt zumindest in einem Betriebszustand zumindest im Wesentlichen innerhalb der zweiten Haupterstreckungsebene erstreckt und sich der zweite Abschnitt zumindest im Wesentlichen innerhalb der dritten Haupterstreckungsebene erstreckt. Dadurch kann eine besonders kompakte Bauweise und ein hoher Wirkungsgrad der Induktionskochfeldvorrichtung erzielt werden.

Zudem wird vorgeschlagen, dass sich das zumindest eine Induktionsheizelement und das zumindest eine weitere Induktionsheizelement in einer Richtung senkrecht zu der zweiten Haupterstreckungsebene betrachtet teilweise überlappen. Insbesondere überlappt der weitere erste Abschnitt des weiteren Induktionsheizelements zumindest teilweise und vorteilhaft zu wenigstens einem Großteil den zweiten Abschnitt des zumindest einen Induktionsheizelements. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Besonders vorteilhaft kann ein Matrixkochfeld mit zumindest einer erfindungsgemäßen Induktionskochfeldvorrichtung ausgestattet werden.

Ferner wird ein Verfahren zur Herstellung einer Induktionskochfeldvorrichtung vorgeschlagen, wobei in zumindest einem Verfahrensschritt ein erster Abschnitt eines Induktionsheizelements einer Induktionsheizeinheit mit zumindest einer ersten Kraftkomponente senkrecht zu einer Haupterstreckungsebene der Induktionsheizeinheit beaufschlagt wird, wodurch eine Haupterstreckungsebene des ersten Abschnitts gegenüber einer Haupterstreckungsebene eines zweiten Abschnitts des Induktionsheizelements der Induktionsheizeinheit verschoben wird. Dadurch kann eine besonders einfache und kostengünstige Produktion der Induktionskochfeldvorrichtung erfolgen. Insbesondere wirkt antiparallel zur ersten Kraftkomponente eine zweite Kraftkomponente auf den zweiten Abschnitt. Besonders vorteilhaft wird die Induktionsheizeinheit zumindest bereichsweise verbogen und/oder plastisch dauerhaft verformt. Zusätzlich wird vorgeschlagen, dass in zumindest einem Verfahrensschritt das Induktionsheizelement der Induktionsheizeinheit, insbesondere zweifach, vorteilhaft doppelbogenförmig und/oder S-förmig, geknickt und/oder gebogen wird. Dadurch kann eine besonders einfache Herstellung der Induktionsheizeinheit erzielt werden.

Zusätzlich wird vorgeschlagen, dass in zumindest einem Verfahrensschritt eine Isolationsschicht der Induktionsheizeinheit, insbesondere in einem zwischen dem ersten Abschnitt und dem zweiten Abschnitt angeordneten Zwischenabschnitt, durchtrennt, insbesondere kontrolliert durchtrennt wird.

Die Induktionskochfeldvorrichtung soll hierbei nicht auf die oben beschriebene Anwendung und Ausführungsform beschränkt sein. Insbesondere kann die Induktionskochfeldvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Induktionskochfeld mit einer Induktionskochfeldvorrichtung in einer schematischen Draufsicht,
- Fig. 2a: eine Induktionsheizeinheit der Induktionskochfeldvorrichtung in einer schematischen Draufsicht,
- Fig. 2b: die Induktionsheizeinheit nach Figur 2a in einer schematischen Seitenansicht,
- Fig. 3a: drei Induktionsheizeinheiten der Induktionskochfeldvorrichtung in einer schematischen Draufsicht,
- Fig. 3b: die drei Induktionsheizeinheiten nach Figur 3a in einer schematischen Seitenansicht,
- Fig. 3c: drei Induktionsheizeinheiten einer alternativ ausgebildeten Induktionskochfeldvorrichtung in einer schematischen perspektivischen Darstellung,
- Fig. 3d: drei Induktionsheizeinheiten einer alternativ ausgebildeten Induktionskochfeldvorrichtung in einer schematischen Seitenansicht,
- Fig. 4a: die Induktionskochfeldvorrichtung in einer schematischen Draufsicht,
- Fig. 4b: eine alternativ ausgebildete Induktionskochfeldvorrichtung in einer schematischen Draufsicht,
- Fig. 4c: eine alternativ ausgebildete Induktionskochfeldvorrichtung in einer schematischen Draufsicht,
- Fig. 4d: eine alternativ ausgebildete Induktionskochfeldvorrichtung in einer schematischen Draufsicht,
- Fig. 4e: eine alternativ ausgebildete Induktionskochfeldvorrichtung in einer schematischen Draufsicht,
- Fig. 4f: eine alternativ ausgebildete Induktionskochfeldvorrichtung in einer schematischen Draufsicht,
- Fig. 5a: ein Induktionsheizelement einer Induktionsheizeinheit in einer schematischen Draufsicht,
- Fig. 5b: ein Heizelementträger einer Induktionsheizeinheit vor einem Biegevorgang in einer schematischen perspektivischen Darstellung,
- Fig. 5c: der Heizelementträger und das Induktionsheizelement nach einem Biegevorgang in einer schematischen perspektivischen Darstellung,
- Fig. 5d: eine Anordnung mehrerer Induktionsheizeinheiten in einer schematischen perspektivischen Darstellung,
- Fig. 6a: eine Induktionsheizeinheit eines zweiten Ausführungsbeispiels einer Induktionskochfeldvorrichtung in einer schematischen Draufsicht,
- Fig. 6b: zwei Induktionsheizeinheiten des zweiten Ausführungsbeispiels der Induktionskochfeldvorrichtung in einer schematischen perspektivischen Darstellung,
- Fig. 6c: die zwei Induktionsheizeinheiten nach Figur 6b in einer schematischen Seitenansicht,
- Fig. 7a: drei Induktionsheizeinheiten eines dritten Ausführungsbeispiels der Induktionskochfeldvorrichtung in einer schematischen Draufsicht,
- Fig. 7b: die drei Induktionsheizeinheiten nach Figur 7a in einer schematischen Unteransicht und
- Fig. 7c: die drei Induktionsheizeinheiten nach Figur 7a in einer schematischen Schnittdarstellung.

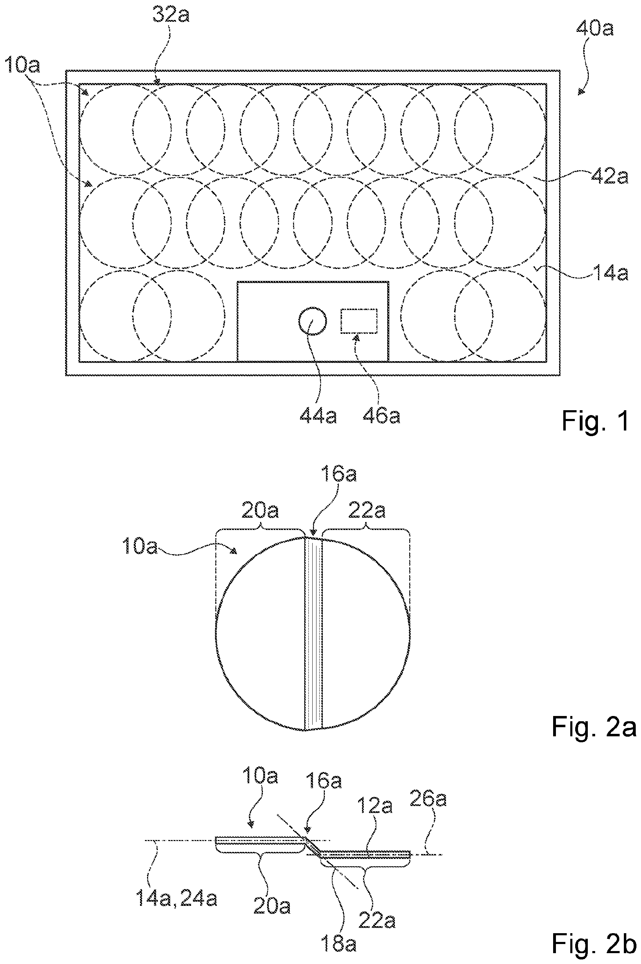

Die Figur 1 zeigt ein Induktionskochfeld 40a mit einer Induktionskochfeldvorrichtung. Die Induktionskochfeldvorrichtung weist eine Kochfeldplatte 42a auf. In einem montierten Zustand bildet die Kochfeldplatte 42a einen Teil eines Kochfeldaußengehäuses, insbesondere des Induktionskochfelds 40a, aus. Die Kochfeldplatte 42a bildet in einer Einbaulage einen einem Bediener zugewandten Teil des Kochfeldaußengehäuses aus. In einem montierten Zustand ist die Kochfeldplatte 42a zu einem Aufstellen von Gargeschirr vorgesehen.

Die Induktionskochfeldvorrichtung weist eine Bedienerschnittstelle 44a zu einer Eingabe und/oder Auswahl von Betriebsparametern, beispielsweise einer Heizleistung und/oder einer Heizleistungsdichte und/oder einer Heizzone auf. Die Bedienerschnittstelle 44a ist zu einer Ausgabe eines Werts eines Betriebsparameters an einen Bediener vorgesehen. Beispielsweise könnte die Bedienerschnittstelle 44a den Wert des Betriebsparameters an einen Bediener optisch und/oder akustisch ausgeben.

Die Induktionskochfeldvorrichtung weist eine Steuereinheit 46a auf. Die Steuereinheit 46a ist dazu vorgesehen, in Abhängigkeit von mittels der Bedienerschnittstelle 44a eingegebenen Betriebsparametern Aktionen auszuführen und/oder Einstellungen zu verändern.

Die Induktionskochfeldvorrichtung weist eine Vielzahl von überlappenden Induktionsheizeinheiten 10a, 32a auf. Von mehrfach vorhandenen Objekten ist in den Figuren jeweils lediglich eines und ein weiteres mit einem Bezugszeichen versehen.

Im vorliegenden Ausführungsbeispiel sind die Induktionsheizeinheiten 10a, 32a, 48a in Form einer Matrix angeordnet. Ein Matrixkochfeld weist hierbei die Induktionskochfeldvorrichtung auf. Die Induktionsheizeinheiten 10a, 32a, 48a weisen im vorliegenden Ausführungsbeispiel bei einer senkrechten Betrachtung auf eine Kochfeldebene 14a der Induktionskochvorrichtung eine im Wesentlichen kreisförmige Gestalt auf.

Die Induktionskochfeldvorrichtung könnte beispielsweise zusätzlich zu den überlappenden Induktionsheizeinheiten 10a, 32a, 48a zumindest eine weitere Induktionsheizeinheit (nicht dargestellt) aufweisen, welches insbesondere überlappungsfrei zu den überlappenden Induktionsheizeinheiten 10a, 32a, 48a angeordnet sein könnte.

Die Induktionsheizeinheiten 10a sind dazu vorgesehen, auf der Kochfeldplatte 42a oberhalb der Induktionsheizeinheiten 10a aufgestelltes Gargeschirr zu erhitzen. In einem Betriebszustand stellen die Induktionsheizeinheiten 10a, welche insbesondere aktiviert sind, einen magnetischen Fluss bereit, welcher insbesondere zu einer Erhitzung von aufgestelltem Gargeschirr vorgesehen ist. Die Induktionsheizeinheiten 10a, welche insbesondere aktiviert sind, führen in einem Betriebszustand aufgestelltem Gargeschirr, insbesondere mittels des magnetischen Flusses, Energie zu. Die Steuereinheit 46a regelt in einem Betriebszustand eine Energiezufuhr zu den insbesondere aktivierten Induktionsheizeinheiten 10a, 32a, 48a. In einer Einbaulage sind die Induktionsheizeinheiten 10a unterhalb der Kochfeldplatte 42a angeordnet.

In den Figuren 2a und 2b ist beispielhaft eine der Induktionsheizeinheiten 10a, 32a, 48a dargestellt. Die folgende Beschreibung der einen Induktionsheizeinheit ist hierbei für alle anderen Induktionsheizeinheiten übertragbar. Die Induktionskochfeldvorrichtung 10a umfasst ein Induktionsheizelement 12a. Das Induktionsheizelement 12a bildet einen Heizleiter aus. Das Induktionsheizelement 12a ist einstückig ausgebildet. Das Induktionsheizelement 12a ist zur einfacheren Darstellung plattenförmig dargestellt. Tatsächlich handelt es sich bei dem Induktionsheizelement 12a um einen spiralförmig gewickelten Draht. Das Induktionsheizelement 12a erstreckt sich in einem Teilbereich 16a entlang einer ersten Haupterstreckungsebene 18a. Die erste Haupterstreckungsebene 18a weicht von der Kochfeldebene 14a ab. Die erste Haupterstreckungsebene 18a schließt mit der Kochfeldebene 14a einen Winkel von etwa 45° ein.

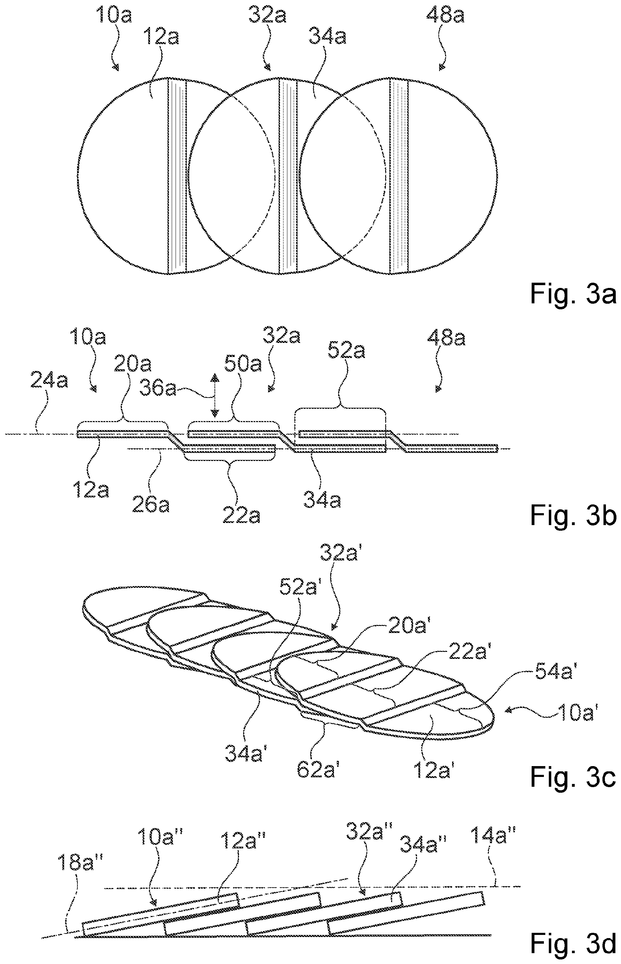

Das Induktionsheizelement 12a weist einen ersten Abschnitt 20a auf. Das Induktionsheizelement 12a weist einen zweiten Abschnitt 22a auf. Der erste Abschnitt 20a erstreckt sich innerhalb einer zweiten Haupterstreckungsebene 24a. Der zweite Abschnitt 22a erstreckt sich innerhalb einer dritten Haupterstreckungsebene 26a. Die dritte Haupterstreckungsebene 26a ist von der zweiten Haupterstreckungsebene 24a verschiedenen. Die zweite Haupterstreckungsebene 24a und die dritte Haupterstreckungsebene 26a verlaufen parallel zueinander. Die zweite Haupterstreckungsebene 24a und die dritte Haupterstreckungsebene 26a sind parallel zueinander versetzt. Die erste Haupterstreckungsebene 18a erstreckt sich parallel zur Kochfeldebene 14a. Der Teilbereich 16a ist zwischen dem ersten Abschnitt 20a und dem zweiten Abschnitt 22a angeordnet. Die erste Haupterstreckungsebene 18a verläuft schräg zur zweiten Haupterstreckungsebene 24a. Die erste Haupterstreckungsebene 18a verläuft schräg zur dritten Haupterstreckungsebene 26a. Der erste Abschnitt 20a und der zweite Abschnitt 22a weisen eine gleiche Größe auf. Der erste Abschnitt 20a und der zweite Abschnitt 22a weisen eine gleiche Fläche, Breite und/oder Länge auf. In den Figuren 3a und 3b ist die Induktionsheizeinheit 10a und eine weitere Induktionsheizeinheit 32a der Induktionskochfeldvorrichtung gezeigt. Es ist ferner eine dritte Induktionsheizeinheit 48a dargestellt, die jedoch aufgrund eines baugleichen Aufbaus mit den Induktionsheizeinheiten 10a, 32a nicht näher beschrieben wird.

Die weitere Induktionsheizeinheit 32a umfasst ein weiteres Induktionsheizelement 34a. Das weitere Induktionsheizelement 34a weist einen weiteren ersten Abschnitt 50a und einen weiteren zweiten Abschnitt 52a auf. Der weitere erste Abschnitt 50a erstreckt sich in einem Betriebszustand und/oder in einem montierten Zustand innerhalb der zweiten Haupterstreckungsebene 24a. Der weitere zweite Abschnitt 52a erstreckt sich innerhalb der dritten Haupterstreckungsebene 26a. Das Induktionsheizelement 12a und das weitere Induktionsheizelement 34a überlappen sich in einer Richtung 36a senkrecht zu der zweiten Haupterstreckungsebene 24a betrachtet teilweise. Insbesondere überlappt der weitere erste Abschnitt 50a des weiteren Induktionsheizelements 34a zu wenigstens einem Großteil den zweiten Abschnitt 22a des Induktionsheizelements 12a.

In einer Variante der Erfindung weist das Induktionsheizelement 12a' der Induktionsheizeinheit 10a' zusätzlich zum ersten Abschnitt 20a' und zweiten Abschnitt 22a', einen dritten Abschnitt 54a' auf. Der dritte Abschnitt 54a' erstreckt sich zumindest im Wesentlichen innerhalb einer vierten Haupterstreckungsebene. Die vierte Haupterstreckungsebene erstreckt sich von der zweiten und dritten Haupterstreckungsebene 24a', 26a' verschieden. Die zweite Haupterstreckungsebene 24a', die dritte Haupterstreckungsebene 26a' und die vierte Haupterstreckungsebene verlaufen parallel zueinander. Die zweite Haupterstreckungsebene 24a', die dritte Haupterstreckungsebene 26a' und die vierte Haupterstreckungsebene sind parallel zueinander versetzt angeordnet. Die dritte Haupterstreckungsebene 26a' ist in einer Richtung 36a' senkrecht zu der zweiten Haupterstreckungsebene 24a' betrachtet, zwischen der zweiten Haupterstreckungsebene 24a' und der vierten Haupterstreckungsebene angeordnet. Das Induktionsheizelement 12a' weist zwei Teilbereiche 16a' auf, die entlang einer ersten Haupterstreckungsebene 18a' und einer fünften Haupterstreckungsebene verlaufen, die beide von der Kochfeldebene 14a' abweichen. Die erste Haupterstreckungsebene 18a' und die fünfte Haupterstreckungsebene verlaufen parallel zueinander. Die Abschnitte 20a', 22a', 54a' unterteilen das Induktionsheizelement in zumindest einer Richtung in drei gleich lange Teile. Wie dargestellt, überlappen sich mehrere der Induktionsheizelemente 12a' derart, dass der erste Abschnitt 20a' und der zweite Abschnitt 22a' eines Induktionsheizelement 12a' einen weiteren zweiten Abschnitt 54a' und einen weiteren dritten Abschnitt 62a' eines weiteren Induktionsheizelements 34a' einer Induktionsheizeinheit 32a' überlappt.

Wie in einer in der Figur 3d gezeigten Variante ist es auch denkbar, dass sich das Induktionsheizelement 12a" nicht nur in einem entlang einer ersten Haupterstreckungsebene 18a" erstreckt, die von der Kochfeldebene 14a" abweicht. Stattdessen erstreckt sich das Induktionsheizelement 12a" vollständig entlang einer ersten Haupterstreckungsebene 18a", die von der Kochfeldebene 14a" abweicht. Auch in diesem Fall können mehrere Induktionsheizelemente 12a" sich teilweise überlappen. Die Induktionsheizelemente 12a" sind hierbei zueinander schräg geschichtet.

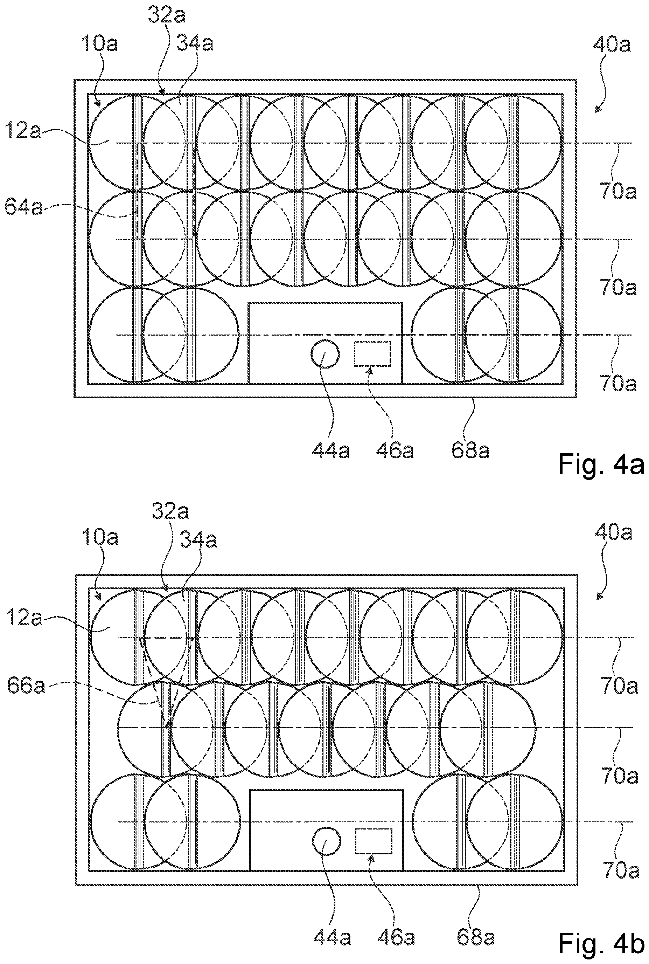

Die Figuren 4a bis 4e zeigen alle die Kochfeldplatte 40a mit verschiedenen Anordnungsmöglichkeiten der Induktionsheizeinheiten 10a, 32a. In der Figur 4a sind die Mittelpunkte aller Induktionsheizeinheiten 10a, 32a in einer Matrix angeordnet. Die Induktionsheizeinheiten 10a, 32a sind in jeweiligen Reihen 70a hintereinander und einander überlappend angeordnet. Zwischen zwei benachbarten Reihen 70a gibt es keine Überlappungen. Die Reihen 70a verlaufen parallel zu einer längsten Außenkante 68a der Kochfeldplatte 40a. Die Reihen 70a verlaufen parallel zueinander. Verbindet man vier Mittelpunkte von zueinander am nächsten liegenden Induktionsheizeinheiten 10a, 32a, ergibt sich ein Rechteck 64a, dessen Länge und Breite voneinander abweichen. Eine längste Kante des Rechtecks 64a verläuft senkrecht zur Außenkante 68a.

In der Figur 4b sind die Mittelpunkte aller Induktionsheizeinheiten 10a, 32a zueinander versetzt in Reihen 70a angeordnet. Somit sind die Induktionsheizeinheiten 10a, 32a in Reihen 70a hintereinander und einander überlappend angeordnet. Zwischen zwei benachbarten Reihen 70a gibt es keine Überlappungen. Die Reihen 70a verlaufen parallel zu einer längsten Außenkante 68a der Kochfeldplatte 40a. Die Reihen 70a verlaufen parallel zueinander. Verbindet man drei Mittelpunkte von zueinander am nächsten liegenden Induktionsheizeinheiten 10a, 32a, ergibt sich ein gleichschenkliges Dreieck 66a. Eine Basis des gleichschenkligen Dreiecks 66a verläuft parallel zu den Reihen 70a und/oder zu der Außenkante 68a.

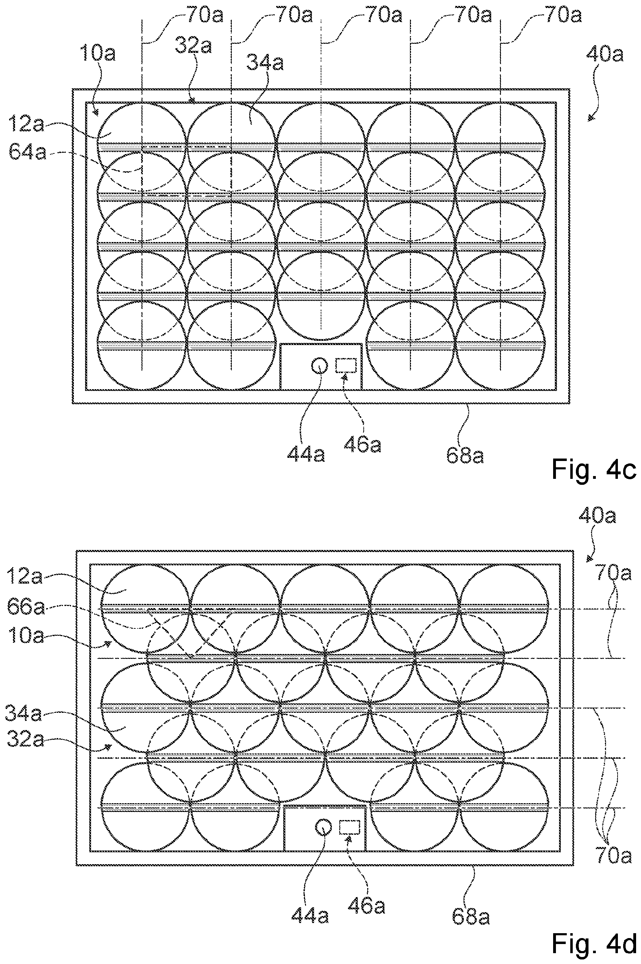

In der Figur 4c sind die Mittelpunkte aller Induktionsheizeinheiten 10a, 32a in einer Matrix angeordnet. Die Induktionsheizeinheiten 10a, 32a sind in jeweiligen Reihen 70a hintereinander und einander überlappend angeordnet. Zwischen zwei benachbarten Reihen 70a gibt es keine Überlappungen. Die Reihen 70a verlaufen senkrecht zu einer längsten Außenkante 68a der Kochfeldplatte 40a. Die Reihen 70a verlaufen parallel zueinander. Verbindet man vier Mittelpunkte von zueinander am nächsten liegenden Induktionsheizeinheiten 10a, 32a ergibt sich ein Rechteck 64a, dessen Länge und Breite voneinander abweichen. Eine längste Kante des Rechtecks 64a verläuft parallel senkrecht zur Außenkante 68a.

In der Figur 4d sind die Mittelpunkte aller Induktionsheizeinheiten 10a, 32a zueinander versetzt in Reihen 70a angeordnet. Die Induktionsheizeinheiten 10a, 32a sind in Reihen 70a und Spalten 72a hintereinander und einander überlappend angeordnet. Zwischen zwei benachbarten Reihen 70a gibt hierbei ebenfalls Überlappungen. Die Reihen 70a verlaufen parallel zu einer längsten Außenkante 68a der Kochfeldplatte 40a. Die Reihen 70a verlaufen parallel zueinander. Verbindet man drei Mittelpunkte von zueinander am nächsten liegenden Induktionsheizeinheiten 10a, 32a ergibt sich ein gleichschenkliges und zumindest im Wesentlichen rechtwinkliges Dreieck 66a. Eine Basis des gleichschenkligen Dreiecks 66a verläuft parallel zu den Reihen 70a und/oder zu der Außenkante 68a.

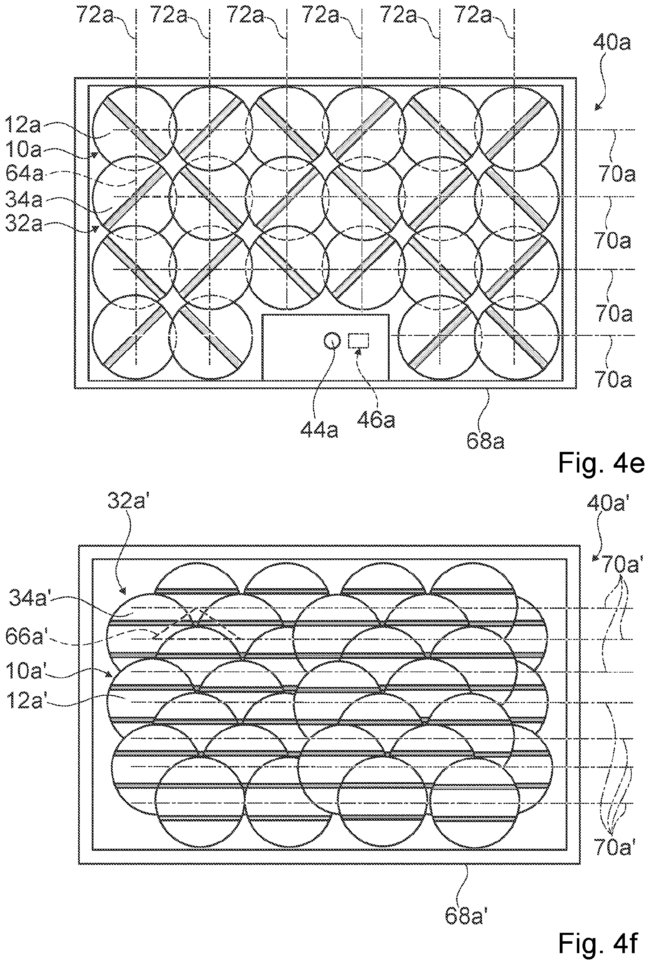

In der Figur 4e sind die Mittelpunkte aller Induktionsheizeinheiten 10a, 32a in einer Matrix angeordnet. Die Induktionsheizeinheiten 10a, 32a sind in jeweiligen Reihen 70a und Spalten 72a hintereinander und einander überlappend angeordnet. Die Reihen 70a und Spalten 72a bilden ein quadratisches Muster aus. Zwischen zwei benachbarten Reihen 70a und Spalten 72a gibt es hierbei Überlappungen der Induktionsheizeinheiten 10a, 32a. Die Reihen 70a verlaufen parallel zu einer längsten Außenkante 68a der Kochfeldplatte 40a. Die Spalten 72a verlaufen senkrecht zu einer längsten Außenkante 68a der Kochfeldplatte 40a. Die Reihen 70a verlaufen parallel zueinander. Die Spalten 72a verlaufen parallel zueinander. Verbindet man vier Mittelpunkte von zueinander am nächsten liegenden Induktionsheizeinheiten 10a, 32a ergibt sich ein Quadrat 64a.

Die Figur 4f zeigt eine alternativ ausgebildete Kochfeldplatte 40a' mit einer Anordnungsmöglichkeit der in der Figur 3c gezeigten Induktionsheizeinheiten 10a', 32a'. Die Induktionsheizeinheiten 10a, 32a sind in Reihen 70a' und Spalten 72a' hintereinander und einander überlappend angeordnet. Zwischen zwei benachbarten Reihen 70a' gibt hierbei ebenfalls Überlappungen. Die Reihen 70a' verlaufen parallel zu einer längsten Außenkante 68a' der Kochfeldplatte 40a'. Die Reihen 70a' verlaufen parallel zueinander. Verbindet man drei Mittelpunkte von zueinander am nächsten liegenden Induktionsheizeinheiten 10a', 32a' ergibt sich ein gleichschenkliges und zumindest im Wesentlichen rechtwinkliges Dreieck 66a'. Eine Basis des gleichschenkligen Dreiecks 66a' verläuft parallel zu den Reihen 70a' und/oder zu der Außenkante 68a'.

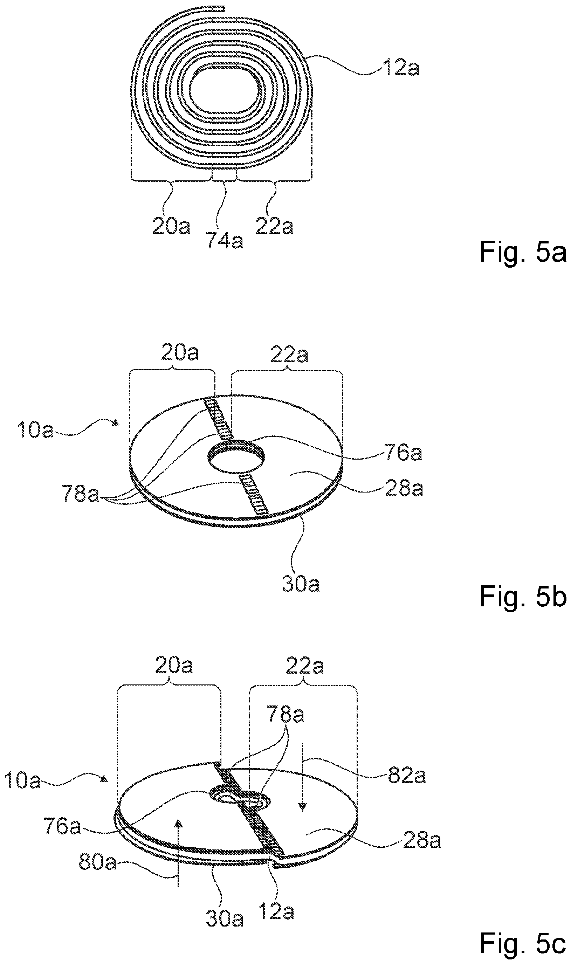

In der Figur 5a ist das Induktionsheizelement 12a der Induktionsheizeinheit 10a detaillierter dargestellt. Das Induktionsheizelement 12a ist spiralförmig und/oder spulenförmig gewickelt und/oder gebogen. In einem Biegebereich 74a verläuft das Induktionsheizelement 12a gerade. Verschiedene Wicklungen des Induktionsheizelements 12 verlaufen im Biegebereich 74a parallel zueinander. Der Biegebereich 74a wird in einem nachfolgend beschriebenen Verfahren zum bereits beschriebenen Teilbereich 16a umgeformt.

Wie in der Figur 5b gezeigt, umfasst die Induktionsheizeinheit 10a einen ersten Heizelementträger 28a. Der Heizelementträger 28a bildet eine Scheibe aus. Der Heizelementträger 28a ist aus einem dem Fachmann als sinnvoll erscheinenden Material, wie insbesondere aus einem Kunststoff und/oder einem Glimmermaterial, ausgebildet. In einem Zentrum weist der Heizelementträger 28a eine Ausnehmung 76a auf. Die Ausnehmung 76a ist durchgängig ausgebildet. Die Ausnehmung 76a ist kreisrund ausgebildet. Die Ausnehmung 76a ist aus dem Heizelementträger 28a ausgestanzt. Entlang des Biegebereichs 74a weist der Heizelementträger 28a weitere Ausnehmungen 78a auf. Die weiteren Ausnehmungen 78a sind aus dem Heizelementträger 28a ausgestanzt. Die weiteren Ausnehmungen 78a bilden eine Sollbruchstelle des Heizelementträgers 28a aus. Weiterhin umfasst die Induktionsheizeinheit 10a einen zweiten Heizelementträger 30a. Der zweite Heizelementträger 30a ist baugleich zum ersten Heizelementträger 28a ausgebildet. Die Heizelementträger 28a, 30a sind übereinander deckungsgleich angeordnet. Zwischen den Heizelementträgern 28a, 30a ist das Induktionsheizelement 12a angeordnet. Das Induktionsheizelement 12a ist zumindest bereichsweise am ersten Heizelementträger 28a angeordnet. Das Induktionsheizelement 12a ist zumindest bereichsweise am zweiten Heizelementträger 30a angeordnet. Die Heizelementträger 28a, 30a und das Induktionsheizelement 12a bilden eine Sandwichstruktur aus.

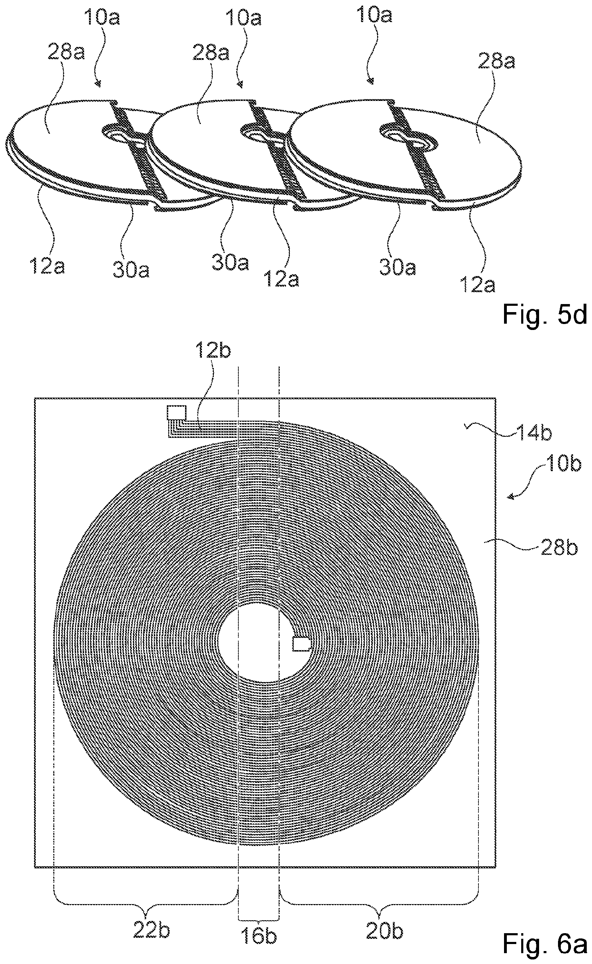

In einem Verfahren zur Herstellung der Induktionskochfeldvorrichtung wird in einem Verfahrensschritt der erste Abschnitt 20a des Induktionsheizelements 12a der Induktionsheizeinheit 10a mit zumindest einer ersten Kraftkomponente 80a senkrecht zu einer Haupterstreckungsebene 18a der Induktionsheizeinheit 10a beaufschlagt. Die Kraftkomponente 80a wirkt dabei auf einen der Heizelementträger 28a, 30a. In diesem Fall wird die Kraftkomponente 80a auf den zweiten Heizelementträger 30a ausgeübt. Eine zur Kraftkomponente 80a entgegengesetzte Kraftkomponente 82a wirkt im zweiten Abschnitt 22a auf das Induktionsheizelement 12a der Induktionsheizeinheit 10a über den ersten Heizelementträger 28a. Zumindest durch die erste Kraftkomponente 80a wird die Haupterstreckungsebene 24a des ersten Abschnitts 20a gegenüber einer Haupterstreckungsebene 26a des zweiten Abschnitts 22a der Induktionsheizeinheit 10a verschoben. Die Heizelementträger 28a, 30a brechen dabei entlang ihrer Sollbruchstellen. Das Induktionsheizelement 12a wird bereichsweise verbogen und/oder plastisch dauerhaft verformt. Genauer gesagt wird die Induktionsheizeinheit 10a zweifach geknickt und/oder gebogen. Das Induktionsheizelement 12a wird dabei doppelbogenförmig und/oder S-förmig gebogen. Die Heizelementträger 28a, 30a bilden eine Isolationsschicht aus. Diese Isolationsschicht wird in einem zwischen dem ersten Abschnitt 20a und dem zweiten Abschnitt 22a angeordneten Zwischenabschnitt durchtrennt, insbesondere kontrolliert durchtrennt. Abschließend werden die so hergestellten Induktionsheizeinheiten 10a einander überlappend angeordnet, wie beispielhaft in der Figur 5d dargestellt.

In den Figuren 6a bis 7b sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 bis 5d, verwiesen werden kann. Zur Unterscheidung der Ausführungsbeispiele ist der Buchstabe a in den Bezugszeichen des Ausführungsbeispiels der Figuren 1 bis 5d durch die Buchstaben b und c in den Bezugszeichen der Ausführungsbeispiele der Figuren 6a bis 7b ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 und 5d, verwiesen werden.

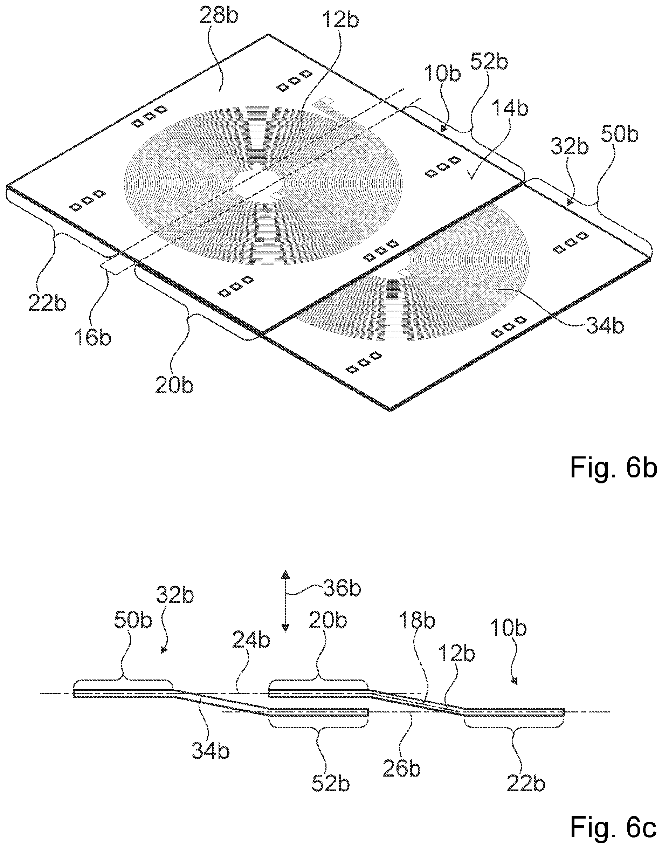

In den Figuren 6a und 6b ist eine Induktionsheizeinheit 10b eines zweiten Ausführungsbeispiels einer Induktionskochfeldvorrichtung dargestellt. Die Induktionsheizeinheit 10b umfasst ein Induktionsheizelement 12b. Die Induktionskochfeldvorrichtung weist eine Kochfeldebene 14b auf. Wie in der Figur 6c übertrieben und nicht maßstäblich dargestellt, erstreckt sich das Induktionsheizelement 12b zumindest in einem Teilbereich 16b entlang einer ersten Haupterstreckungsebene 18b, die von der Kochfeldebene 14b abweicht. Das Induktionsheizelement 12b weist einen ersten Abschnitt 20b und einen zweiten Abschnitt 22b auf. Der erste Abschnitt 20b erstreckt sich innerhalb einer zweiten Haupterstreckungsebene 24b. Der zweite Abschnitt 22b erstreckt sich innerhalb einer von der zweiten Haupterstreckungsebene 24b verschiedenen dritten Haupterstreckungsebene 26b. Ein Versatz zwischen den Haupterstreckungsebenen 24b, 26b ist relativ gering, weshalb er in den Figuren 6a und 6b nicht zu erkennen ist und in der Figur 6c stark übertrieben dargestellt ist. Der Teilbereich 16b ist zwischen dem ersten Abschnitt 20b und dem zweiten Abschnitt 22b angeordnet.

Wie in der Figur 6c weiter gezeigt, verlaufen die zweite Haupterstreckungsebene 24b und die dritte Haupterstreckungsebene 26b parallel zueinander. Die Induktionsheizeinheit 10b umfasst einen ersten Heizelementträger 28b. Der Heizelementträger 28b ist lediglich in den Figuren 6a und 6b gezeigt und aus Gründen der Übersichtlichkeit in der Figur 6c nicht dargestellt. Der Heizelementträger 28b bildet eine Leiterplatte aus. Das Induktionsheizelement 12b ist auf dem Heizelementträger 28b angeordnet. Zur Aufnahme des Induktionsheizelements 12b sind im Heizelementträger 28b Rillen und/oder Furchen eingelassen. Das Induktionsheizelement 12b ist auf den Heizelementträger 28b aufgedruckt oder in einem anderen, dem Fachmann als sinnvoll erscheinenden Verfahren aufgetragen.

Wie in der Figur 6b näher gezeigt, umfasst die Induktionskochfeldvorrichtung eine weitere Induktionsheizeinheit 32b mit zumindest einem weiteren Induktionsheizelement 34b, welches einen weiteren ersten Abschnitt 50b und zumindest einen weiteren zweiten Abschnitt 52b aufweist. Der weitere erste Abschnitt 50b erstreckt sich in einem Betriebszustand innerhalb der zweiten Haupterstreckungsebene 24b und sich der zweite Abschnitt 52b erstreckt sich innerhalb der dritten Haupterstreckungsebene 26b. Das Induktionsheizelement 12b und das weitere Induktionsheizelement 34b überlappen sich in einer Richtung 36b senkrecht zu der zweiten Haupterstreckungsebene 24b betrachtet teilweise.

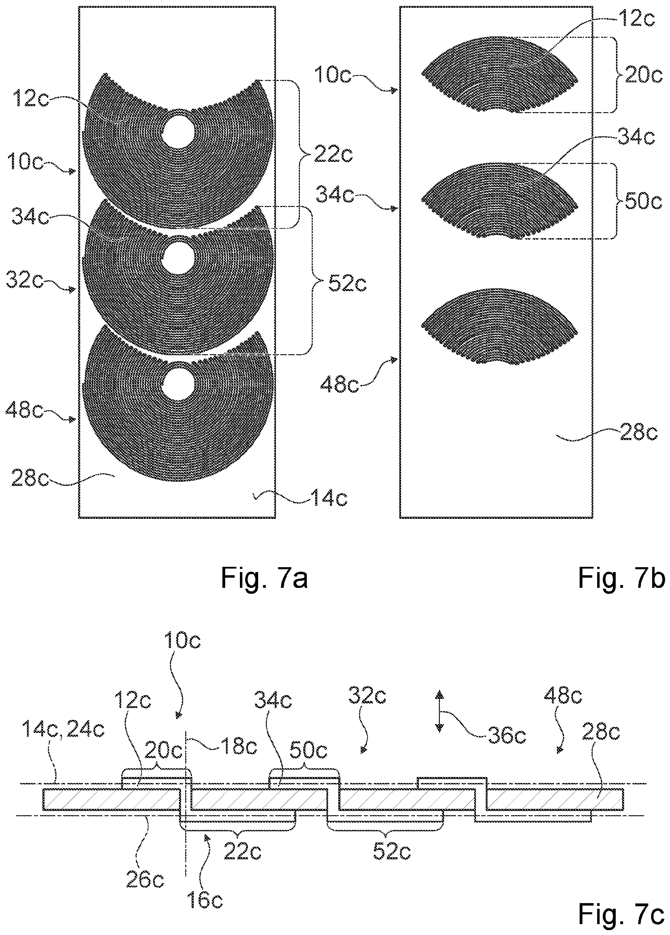

In den Figuren 7a und 7b ist eine Induktionsheizeinheit 10c eines dritten Ausführungsbeispiels einer Induktionskochfeldvorrichtung dargestellt. Die Induktionsheizeinheit 10c umfasst ein Induktionsheizelement 12c. Die Induktionskochfeldvorrichtung weist eine Kochfeldebene 14c auf. Wie in der Figur 7c in einer schematischen Schnittdarstellung gezeigt, erstreckt sich das Induktionsheizelement 12c zumindest in einem Teilbereich 16c entlang einer ersten Haupterstreckungsebene 18c, die von der Kochfeldebene 14c abweicht. Die erste Haupterstreckungsebene 18c verläuft senkrecht zur Kochfeldebene 14c. Das Induktionsheizelement 12c weist einen ersten Abschnitt 20c und einen zweiten Abschnitt 22c auf. Der erste Abschnitt 20c erstreckt sich innerhalb einer zweiten Haupterstreckungsebene 24c. Der zweite Abschnitt 22c erstreckt sich innerhalb einer von der zweiten Haupterstreckungsebene 24c verschiedenen dritten Haupterstreckungsebene 26c. Der Teilbereich 16c ist in einem Überlappungsbereich des ersten Abschnitts 20c und des zweiten Abschnitts 22c angeordnet.

Wie in der Figur 7c weiter gezeigt, verlaufen die zweite Haupterstreckungsebene 24c und die dritte Haupterstreckungsebene 26c zumindest im Wesentlichen parallel zueinander. Die Induktionsheizeinheit 10c umfasst einen ersten Heizelementträger 28c. Der Heizelementträger 28c bildet eine Leiterplatte aus. Das Induktionsheizelement 12c ist auf dem Heizelementträger 28c angeordnet. Zur Aufnahme des Induktionsheizelements 12c sind im Heizelementträger 28c Rillen und/oder Furchen eingelassen. Das Induktionsheizelement 12c ist auf den Heizelementträger 28c aufgedruckt und in einem anderen, dem Fachmann als sinnvoll erscheinenden Verfahren aufgetragen. Das Induktionsheizelement 12c verläuft im ersten Abschnitt 20c auf einer ersten Seite des Heizelementträgers 28c. Das Induktionsheizelement 12c verläuft im zweiten Abschnitt 22c auf einer zweiten Seite des Heizelementträgers 28c. Die erste Seite des Heizelementträgers 28c und die zweite Seite des Heizelementträgers 28c sind voneinander abgewandt. Es ist prinzipiell denkbar, dass der Heizelementträger 28c drei und/oder mehrere Lagen umfasst, in welchen das Induktionsheizelement 12c angeordnet ist. Im Teilbereich 16c geht das Induktionsheizelement 12c durch den Heizelementträger 28c hindurch von einer Seite auf die andere Seite. Der Teilbereich 16c verläuft senkrecht auf die Kochfeldebene 14c betrachtet sichelförmig.

Wie in den Figur 7a und 7b gezeigt, sind auf dem Heizelementträger 28c mehrere Induktionsheizeinheiten 10c, 32c, 48c hintereinander angeordnet. Es ist in diesem Zusammenhang jedoch auch denkbar, dass jede Induktionsheizeinheit 10c, 32c, 48c auf einem separaten Heizelementträger 28c angeordnet ist. Ein weitere Induktionsheizeinheit 32c der Induktionsheizeinheiten 10c, 32, 48c weist ein weiteres Induktionsheizelement 34c auf, welches einen weiteren ersten Abschnitt 50c und zumindest einen weiteren zweiten Abschnitt 52c aufweist. Der weitere erste Abschnitt 50c erstreckt sich in einem Betriebszustand innerhalb der zweiten Haupterstreckungsebene 24c und sich der zweite Abschnitt 52c erstreckt sich innerhalb der dritten Haupterstreckungsebene 26c. Das Induktionsheizelement 12c und das weitere Induktionsheizelement 34c überlappen sich in einer Richtung 36c senkrecht zu der zweiten Haupterstreckungsebene 24c betrachtet teilweise.

### Bezugszeichen

- 10: Induktionsheizeinheit
- 12: Induktionsheizelement
- 14: Kochfeldebene
- 16: Teilbereich
- 18: Haupterstreckungsebene
- 20: Abschnitt
- 22: Abschnitt
- 24: Haupterstreckungsebene
- 26: Haupterstreckungsebene
- 28: Heizelementträger
- 30: Heizelementträger
- 32: Induktionsheizeinheit
- 34: Induktionsheizelement
- 36: Richtung
- 40: Induktionskochfeld
- 42: Kochfeldplatte
- 44: Bedienerschnittstelle
- 46: Steuereinheit
- 48: Induktionsheizeinheit
- 50: Abschnitt
- 52: Abschnitt
- 54: Abschnitt
- 62: Abschnitt
- 64: Rechteck
- 66: Dreieck
- 68: Außenkante
- 70: Reihe
- 72: Spalte
- 74: Biegebereich
- 76: Ausnehmung
- 78: Ausnehmung
- 80: Kraftkomponente
- 82: Kraftkomponente

## Patentansprüche

1. Induktionskochfeldvorrichtung mit zumindest einer Induktionsheizeinheit (10a-c), welche zumindest ein Induktionsheizelement (12a-c) umfasst, und mit zumindest einer Kochfeldplatte (42a) mit einer Kochfeldebene (14a-c), welche sich entlang der Kochfeldplatte (42a) erstreckt, **dadurch gekennzeichnet, dass** sich das zumindest eine Induktionsheizelement (12a-c) zumindest in einem Teilbereich (16a-c) entlang einer ersten Haupterstreckungsebene (18a-c) erstreckt, die von der Kochfeldebene (14a-c) abweicht und die nicht parallel zu der Kochfeldebene (14a-c) verläuft.

2. Induktionskochfeldvorrichtung nach Anspruch 1, **dadurch gekennzeichnet, dass** das zumindest eine Induktionsheizelement (12a-c) einen ersten Abschnitt (20a-c) und zumindest einen zweiten Abschnitt (22a-c) aufweist, wobei sich der erste Abschnitt (20a-c) zumindest im Wesentlichen innerhalb einer zweiten Haupterstreckungsebene (24a-c) erstreckt und sich der zweite Abschnitt (22a-c) zumindest im Wesentlichen innerhalb einer von der zweiten Haupterstreckungsebene (24a-c) verschiedenen dritten Haupterstreckungsebene (26a-c) erstreckt.

3. Induktionskochfeldvorrichtung nach Anspruch 2, **dadurch gekennzeichnet, dass** die zweite Haupterstreckungsebene (24a-c) und die dritte Haupterstreckungsebene (26a-c) zumindest im Wesentlichen parallel zueinander verlaufen.

4. Induktionskochfeldvorrichtung nach einem der vorhergehenden Ansprüche, **dadurch gekennzeichnet, dass** die Induktionsheizeinheit (10a-c) zumindest einen ersten Heizelementträger (28a-c, 30a) umfasst, an dem das zumindest eine Induktionsheizelement (12a-c) zumindest bereichsweise angeordnet ist.

5. Induktionskochfeldvorrichtung zumindest nach Anspruch 2, **dadurch gekennzeichnet, dass** der zumindest eine Teilbereich (16a-c) zwischen dem ersten Abschnitt (20a-c) und dem zweiten Abschnitt (22a-c) angeordnet ist.

6. Induktionskochfeldvorrichtung zumindest nach Anspruch 2, **gekennzeichnet durch** zumindest eine weitere Induktionsheizeinheit (32a-c) mit zumindest einem weiteren Induktionsheizelement (34a-c), welches einen weiteren ersten Abschnitt (50a-c) und zumindest einen weiteren zweiten Abschnitt (52a-c) aufweist, wobei sich der weitere erste Abschnitt (50a-c) zumindest in einem Betriebszustand zumindest im Wesentlichen innerhalb der zweiten Haupterstreckungsebene (24a-c) erstreckt und sich der zweite Abschnitt (52a-c) zumindest im Wesentlichen innerhalb der dritten Haupterstreckungsebene (26a-c) erstreckt.

7. Induktionskochfeldvorrichtung nach Anspruch 6, **dadurch gekennzeichnet, dass** sich das zumindest eine Induktionsheizelement (12a-c) und das zumindest eine weitere Induktionsheizelement (34a-c) in einer Richtung (36a-c) senkrecht zu der zweiten Haupterstreckungsebene (24a-c) betrachtet teilweise überlappen.

8. Matrixkochfeld mit zumindest einer Induktionskochfeldvorrichtung nach einem der vorhergehenden Ansprüche.

9. Verfahren zur Herstellung einer Induktionskochfeldvorrichtung nach einem der Ansprüche 1 bis 7, wobei in zumindest einem Verfahrensschritt ein erster Abschnitt (20a) eines Induktionsheizelements (12a) einer Induktionsheizeinheit (10a) mit zumindest einer ersten Kraftkomponente (80a) senkrecht zu einer Haupterstreckungsebene (24a) der Induktionsheizeinheit (10a) beaufschlagt wird, wodurch eine Haupterstreckungsebene (24a) des ersten Abschnitts (20a) gegenüber einer Haupterstreckungsebene (26a) eines zweiten Abschnitts (22a) des Induktionsheizelements (12a) der Induktionsheizeinheit (10a) verschoben wird.

10. Verfahren nach Anspruch 9, **dadurch gekennzeichnet, dass** in dem zumindest einen Verfahrensschritt das Induktionsheizelement (12a) der Induktionsheizeinheit (10a), insbesondere zweifach, vorteilhaft doppelbogenförmig und/oder S-förmig, geknickt wird.

## Claims

1. Induction cooktop device with at least one induction heating unit (10a-c), which comprises at least one induction heating element (12a-c), and with at least one cooktop hotplate (42a) with a cooktop plane (14a-c) that extends along the cooktop hotplate (42a), **characterised in that** the at least one induction heating element (12a-c) extends at least in a subarea (16a-c) along a first principal plane of orientation (18a-c) which deviates from the cooktop plane (14a-c) and which does not run parallel to the cooktop plane (14a-c).

2. Induction cooktop device according to claim 1, **characterised in that** the at least one induction heating element (12a-c) has a first section (20a-c) and at least one second section (22a-c), wherein the first section (20a-c) extends at least essentially within a second principal plane of orientation (24a-c) and the second section (22a-c) extends at least essentially within a third principal plane of orientation (26a-c) which differs from the second principal plane of orientation (24a-c).

3. Induction cooktop device according to claim 2, **characterised in that** the second principal plane of orientation (24a-c) and the third principal plane of orientation (26a-c) run at least essentially parallel to each other.

4. Induction cooktop device according to one of the preceding claims, **characterised in that** the induction heating unit (10a-c) comprises at least one first heating element support (28a-c, 30a), on which the at least one induction heating element (12a-c) is arranged at least in certain areas.

5. Induction cooktop device at least according to claim 2, **characterised in that** the at least one subarea (16a-c) is arranged between the first section (20a-c) and the second section (22a-c).

6. Induction cooktop device at least according to claim 2, **characterised by** at least one further induction heating unit (32a-c) with at least one further induction heating element (34a-c), which has a further first section (50a-c) and at least one further second section (52a-c), wherein at least in an operating status the further first section (50a-c) extends at least essentially within the second principal plane of orientation (24a-c) and the second section (52a-c) extends at least essentially within the third principal plane of orientation (26a-c).

7. Induction cooktop device according to claim 6, **characterised in that** viewed in a direction (36a-c) perpendicular to the second principal plane of orientation (24a-c), the at least one induction heating element (12a-c) and the at least one further induction heating element (34a-c) partially overlap.

8. Matrix cooktop with at least one induction cooktop device according to one of the preceding claims.

9. Method for producing an induction cooktop device according to one of claims 1 to 7, wherein in at least one method step a first section (20a) of an induction heating element (12a) of an induction heating unit (10a) is subjected to at least one first force component (80a) perpendicular to a principal plane of orientation (24a) of the induction heating unit (10a), by means of which a principal plane of orientation (24a) of the first section (20a) is displaced relative to a principal plane of orientation (26a) of a second section (22a) of the induction heating element (12a) of the induction heating unit (10a).

10. Method according to claim 9, **characterised in that** in the at least one method step, the induction heating element (12a) of the induction heating unit (10a) is folded, in particular in a two-fold manner, advantageously into a double-bend and/or S-shaped form.

## Revendications

1. Dispositif de table de cuisson par induction ayant au moins une unité de chauffage par induction (10a-c), laquelle comprend au moins un élément de chauffage par induction (12a-c) et ayant au moins une plaque de table de cuisson (42a) avec un plan de table de cuisson (14a-c), lequel s'étend le long de la plaque de table de cuisson (42a), **caractérisé en ce que** le au moins un élément de chauffage par induction (12a-c) s'étend au moins pour une zone partielle (16a-c) le long d'un premier plan d'extension principal (18a-c), qui s'écarte du plan de table de cuisson (14a-c) et n'est pas parallèle au plan de table de cuisson (14a-c).

2. Dispositif de table de cuisson par induction selon la revendication 1, **caractérisé en ce que** le au moins un élément de chauffage par induction (12a-c) comprend une première partie (20a-c) et au moins une deuxième partie (22a-c), la première partie (20a-c) s'étendant au moins essentiellement à l'intérieur d'un deuxième plan d'extension principal (24a-c) et la deuxième partie (22a-c) s'étendant au moins essentiellement à l'intérieur d'un troisième plan d'extension principal (26a-c) différent du deuxième plan d'extension principal (24a-c).

3. Dispositif de table de cuisson par induction selon la revendication 2, **caractérisé en ce que** le deuxième plan d'extension principal (24a-c) et le troisième plan d'extension principal (26a-c) progressent au moins essentiellement parallèlement l'un à l'autre.

4. Dispositif de table de cuisson par induction selon l'une des revendications précédentes, **caractérisé en ce que** l'unité de chauffage par induction (10a-c) comprend au moins un premier support d'élément de chauffage (28a-c, 30a), auprès de laquelle le au moins un élément de chauffage par induction (12a-c) est agencé au moins en partie.

5. Dispositif de table de cuisson par induction selon la revendication 2, **caractérisé en ce que** la au moins une zone partielle (16a-c) se trouve entre la première partie (20a-c) et la deuxième partie (22a-c).

6. Dispositif de table de cuisson par induction au moins selon la revendication 2, **caractérisé par** au moins une autre unité de chauffage par induction (32a-c) comprenant au moins un autre élément de chauffage par induction (34a-c), lequel comprend une autre première partie (50a-c) et au moins une autre deuxième partie (52a-c), l'autre première partie (50a-c) s'étendant au moins dans un état de service au moins essentiellement à l'intérieur du deuxième plan d'extension principal (24a-c) et la deuxième partie (52a-c) s'étendant au moins essentiellement à l'intérieur du troisième plan d'extension principal (26a-c).

7. Dispositif de table de cuisson par induction selon la revendication 6, **caractérisé en ce que** le au moins un élément de chauffage par induction (12a-c) et le au moins un autre élément de chauffage par induction (34a-c) se chevauchent en partie vu dans le sens perpendiculaire (36a-c) au deuxième plan d'extension principal (24a-c).

8. Table de cuisson à matrice comprenant au moins un dispositif de table de cuisson par induction selon l'une des revendications précédentes.

9. Procédé de fabrication d'un dispositif de table de cuisson par induction selon l'une des revendications 1 à 7, dans lequel dans au moins une étape de procédé la première partie (20a) d'un élément de chauffage par induction (12a) d'une unité de chauffage par induction (10a) est sollicitée à l'aide d'au moins un premier composant de force (80a) à la perpendiculaire d'un plan d'extension principal (24a) de l'unité de chauffage par induction (10a), ce qui fait qu'un plan d'extension principal (24a) de la première partie (20a) est décalé par rapport à un plan d'extension principal (26a) d'une deuxième partie (22a) de l'élément de chauffage par induction (12a) de l'unité de chauffage par induction (10a).

10. Procédé selon la revendication 9, **caractérisé en ce que** dans la au moins une étape de procédé, l'élément de chauffage par induction (12a) de l'unité de chauffage par induction (10a), est infléchi en particulier deux fois, avantageusement en forme de double arc et/ou en forme de S.
